# EUROPÄISCHE PATENTANMELDUNG

(11) **EP 1 271 443 A1**
(43) Veröffentlichungstag der Anmeldung: **02.01.2003**
(21) Anmeldenummer: 01115123.0
(22) Anmeldetag: 21.06.2001
(51) Int. Cl.: G08B 25/00

(54) **Verfahren zur Automatisierung von Projektierungsabläufen für Meldeanlagen und Computersystem**

(71) Anmelder: Siemens Gebäudesicherheit GmbH & Co. OHG, 80807 München (DE)
(72) Erfinder: Hilsinger, Horst, 76872 Minfeld (DE)
(74) Vertreter: Berg, Peter, Dipl.-Ing.

(57) **Zusammenfassung**

Die Erfindung bezieht sich auf ein Verfahren zur Automatisierung von Projektierungsabläufen für Meldeanlagen und ein Computersystem zur Durchführung des Verfahrens. Dabei werden technische Daten möglicher Einzelkomponenten in einem Datenbank-System (2) abgespeichert, für eine zu projektierende Meldeanlage die dafür vorgesehenen Einzelkomponenten und deren räumliche Anordnung erfasst und mit Hilfe der technischen Daten aus dem Datenbank-System (2) und vorgegebener Algorithmen werden für die Betriebsfähigkeit der Meldeanlage notwendige Zusatzkomponenten ermittelt und mit den vorgesehenen Einzelkomponenten in einer optimierten Struktur angeordnet.

## Beschreibung

Die Erfindung bezieht sich auf ein Verfahren zur Automatisierung von Projektierungsabläufen sowie ein Computersystem zur Durchführung des Verfahrens.

Die Konfiguration von Meldeanlagen, insbesondere von Brandmeldeanlagen für komplexere Gebäudestrukturen, wird heutzutage manuell durch einen Spezialisten durchgeführt. Hierzu ist ein hohes Maß an Expertenwissen notwendig, die Konfiguration gestaltet sich zeitaufwendig, kompliziert und fehleranfällig.

Es ist daher die Aufgabe der vorliegenden Erfindung ein Verfahren zur Automatisierung von Projektierungsabläufen anzugeben, welches die Projektierung schneller und fehlerfreier erlaubt.

Die Aufgabe wird erfindungsgemäß gelöst durch ein Verfahren mit den Merkmalen des Anspruchs 1 sowie ein Computersystem mit den Merkmalen des Anspruchs 11.

Dabei werden zunächst die technischen Daten möglicher Einzelkomponenten der Meldeanlagen in einem Datenbanksystem abgespeichert, und anschließend werden die für eine zu projektierende Meldeanlage vorgesehenen Einzelkomponenten und deren räumliche Anordnung erfaßt. Anhand der im Datenbanksystem abgespeicherten technischen Daten wird nun anhand vorgegebener Algorithmen die Meldeanlage dergestalt konfiguriert, daß die vorgesehenen Einzelkomponenten auf deren gegenseitige Verträglichkeit überprüft werden sowie für den Betrieb der Meldeanlage notwendige Zusatzkomponenten ermittelt werden und als Ergebnis die Struktur der Einzelkomponenten und der ermittelten Zusatzkomponenten ausgegeben werden.

Durch den automatischen Ablauf der Projektierung ist dieses schnell und fehlerfrei möglich.

In vorteilhafter Weise wird gemäß Anspruch 2 aus den im Datenbanksystem hinterlegten Zentralen eine für die projektierte Meldeanlage geeignete Meldezentrale ermittelt, die für die vorgegebenen Aufgaben die notwendigen technischen Bedingungen erfüllt.

Für die Ermittlung des im Falle eines Stromausfalls notwendigen Notstroms wird in vorteilhafter Weise gemäß Anspruch 3 vorgesehen, daß für alle ausgewählten Einzelkomponenten und Zusatzkomponenten eine Notstromrechnung durchgeführt wird.

Für den Fall, daß im Rahmen des automatischen Projektierungsablaufs keine Lösung zum angegebenen Problem gefunden werden kann, wird gemäß Anspruch 4 eine Fehlermeldung ausgegeben, damit die Eingabe anderer Einzelkomponenten ermöglicht wird.

Durch die gemäß Anspruch 6 vorgesehene Kompatibilitätsprüfung der Einzelkomponenten bereits während deren Eingabe wird die Eingabe von Fehlinformationen reduziert und die Projektierung weiter erleichtert.

In vorteilhafter Weise ist gemäß Anspruch 7 vorgesehen, daß einzuhaltende Richtlinien für Meldeanlagen in das Datenbanksystem eingegeben werden und bei der Ermittlung der Zusatzkomponenten und der Struktur berücksichtigt werden, damit diese Richtlinien nicht mehr neu berücksichtigt werden müssen.

Gemäß Anspruch 8 ist vorgesehen, daß als Eingabe der Einzelkomponenten die Anzahl der Standardmelder, die Anzahl der Spezialmelder, akustische und optische Alarmgeräte, Geräte für die Alarmweiterleitung, Bedien- und Anzeigeterminals und Zusatzstromverbraucher eingegeben werden können.

Besonders geeignet ist das Verfahren für Brandmeldeanlagen als Meldeanlagen gemäß Anspruch 9. Bei Brandmeldeanlagen lassen sich als Einzelkomponenten auch Brandfallsteuerungen gemäß Anspruch 10 eingeben.

Anhand der Figuren der Zeichnung wird die Erfindung näher erläutert.

Dabei zeigen
Figur 1 ein Blockdiagramm des erfindungsgemäßen Verfahrens,
Figur 2 eine Eingabemaske für das erfindungsgemäße Verfahren,
Figur 3 eine Ausgabemaske für ein ausgegebenes Ergebnis und
Figur 4 eine Konfigurationsmaske für eine besondere Bus- oder Linienkonfiguration.

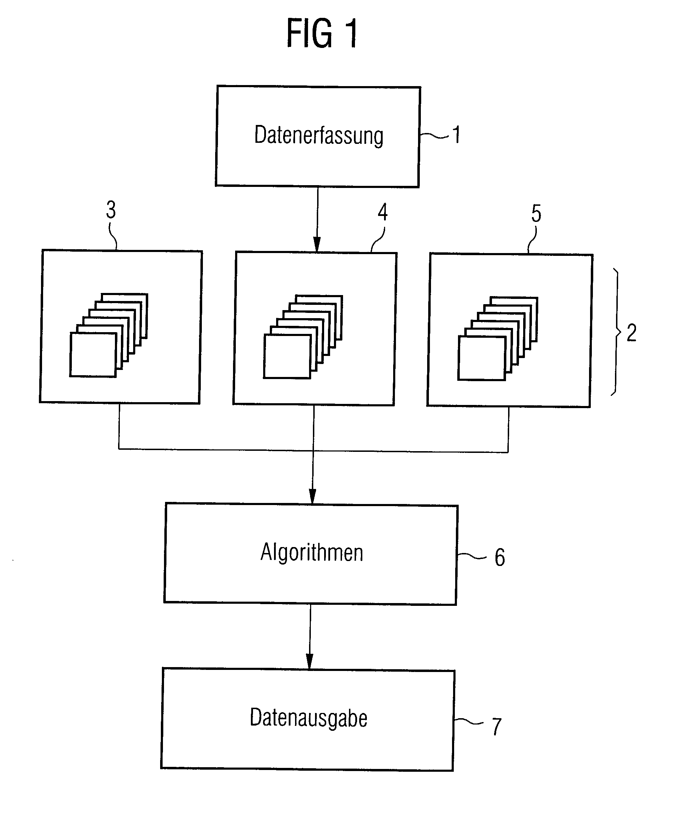

In Figur 1 ist schematisch der Ablauf des erfindungsgemäßen Verfahrens dargestellt. Dabei wird zunächst in einem ersten Block 1 eine Datenerfassung der Einzelkomponenten der zu konfigurierenden Meldeanlage dargestellt. Anschließend werden die technischen Daten aus einem Datenbanksystem 2 ermittelt, die für die erfaßten Einzelkomponenten wesentlich sind. Im vorliegenden Beispiel ist das Datenbanksystem 2 aus insgesamt drei Datenbanken aufgebaut, nämlich einer Datenbank 3 mit automatisch konfigurierten Komponenten, einer Datenbank 4 mit manuell konfigurierten Komponenten und einer Basisdatenbank 5 mit Artikeldaten. Anhand vorgegebener Algorithmen 6 wird die optimale Konfiguration ermittelt und dabei werden Zusatzkomponenten, die für die Betriebsfähigkeit der Meldeanlage notwendig sind, wie beispielsweise zusätzliche Linienbaugruppen, Steuerbaugruppen, Zubehör oder Montagebauteile, hinzugefügt und eine Struktur aus eingegebenen Einzelkomponenten und Zusatzkomponenten ermittelt. Die ermittelte Struktur wird dann im Rahmen einer Datenausgabe 7 dargestellt. Das Verfahren läuft zweckmäßigerweise auf einem Computersystem ab.

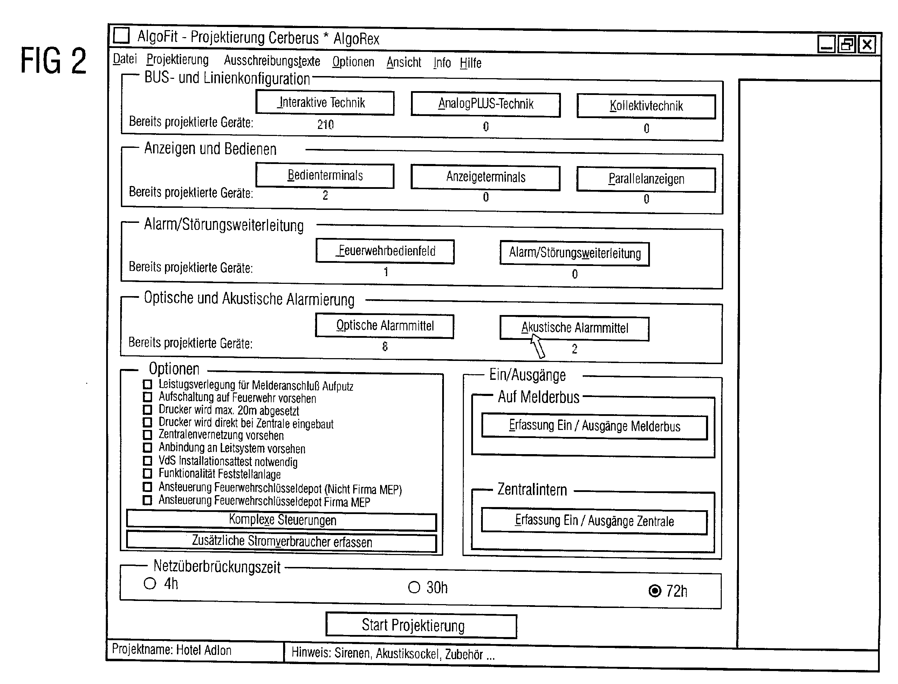

In Figur 2 ist eine Hauptmaske für die Eingabe von Einzelkomponenten dargestellt, bei der beispielsweise die Bus- und Linienkonfiguration eingegeben werden kann, zusätzlich können Anzeige- und Bedienterminals angegeben werden, die Art der Alarm- bzw. Störungsweiterleitung ist auswählbar sowie optische und akustische Alarmierungselemente. Darüber hinaus sind weitere Optionen für die Meldeanlage vorgesehen und es ist eine Möglichkeit gegeben, die im Falle eines Netzausfalls benötigte Netzüberbrückungszeit anzugeben.

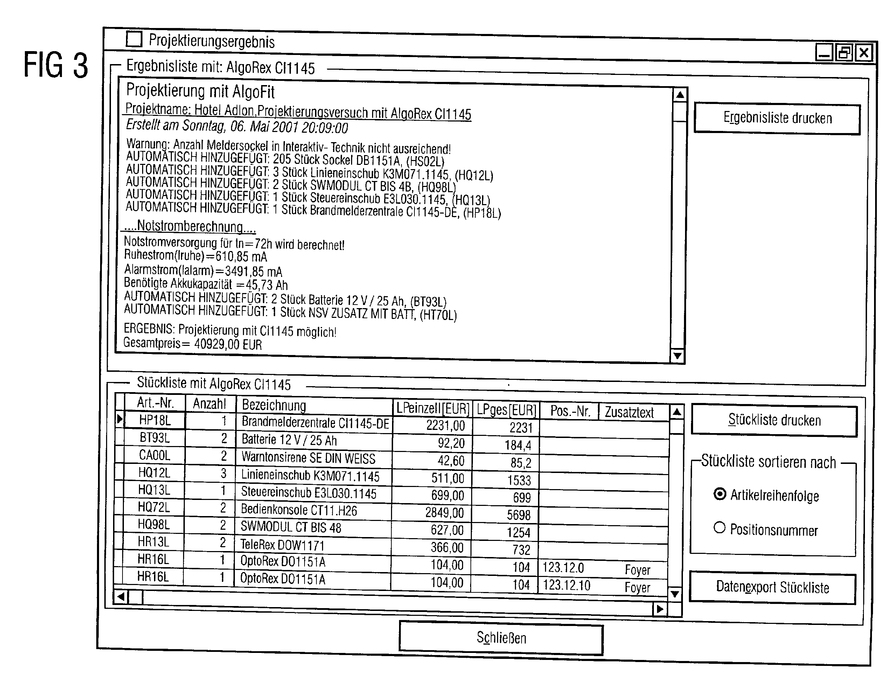

In Figur 3 ist ein Projektierungsergebnis dargestellt, welches anzeigt, welche Zusatzkomponenten für die Betriebsfähigkeit der Meldeanlagen als notwendig erachtet werden und darüber hinaus ist eine Notstromberechnung für die betriebsfähige Anlage unter Berücksichtigung der eingegebenen Einzelkomponenten und der ermittelten Zusatzkomponenten durchgeführt worden. Zusätzlich wird eine Stückliste ausgegeben, anhand derer auch bereits der Endpreis ermittelt werden kann. Gegebenenfalls lassen sich auch Ausschreibungsunterlagen erstellen.

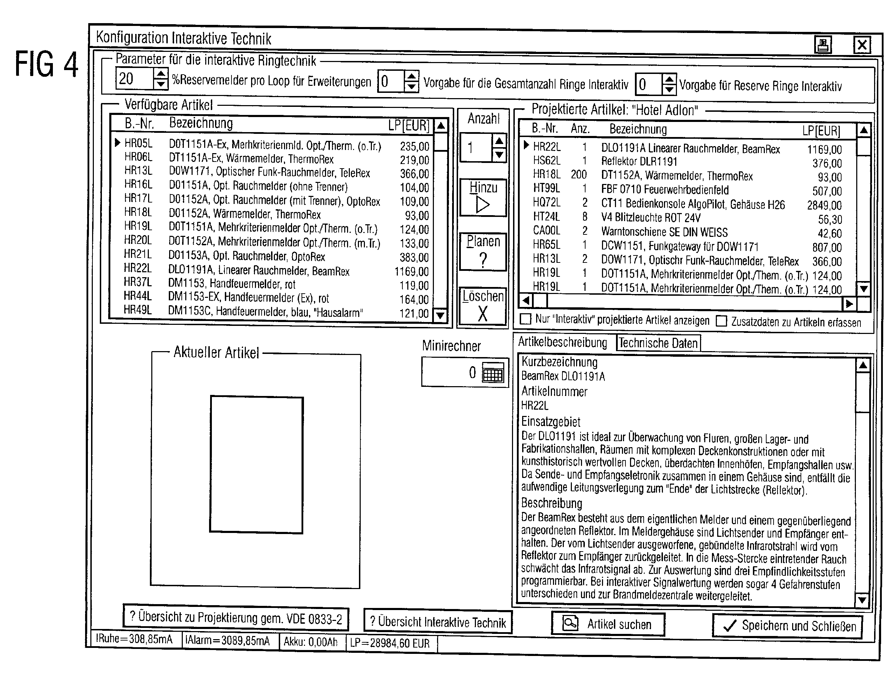

Die Eingabe der Einzelkomponenten erfolgt über eine in Figur 4 dargestellte Konfigurationsmaske, mit deren Hilfe aus einer im Datenbanksystem abgespeicherten Menge an Einzelkomponenten die entsprechenden Komponenten ausgewählt werden. Mit der vorliegenden Erfindung wird die Konfigurationsaufgabe mit dem aktuellsten Stand der Technik möglich. Zusätzlich zur schnellen und fehlerfreien Projektierung können neben den technologischen Anforderungen, die sich aus dem Mengengerüst der Einzelkomponenten ergeben, auch zusätzlich noch Vorgaben für Erweiterungen der Meldeanlage sowie meldeanlagenspezifische Optionen eingebracht werden.

Die elementaren Produktdaten können innerhalb des Datenbanksystemes in mehreren Tabelle einer relationalen Datenbank hinterlegt werden und somit unabhängig von den Algorithmen gepflegt werden.

Das Programm erwartet eine Eingabe des Mengengerüstes in folgender Form:
- Anzahl der Standardmelder,
- Anzahl der Spezialmelder,
- Vorgabe für Erweiterungen des Anlagenausbaus,
- akustische und optische Alarmgeräte,
- Geräte für die Alarmweiterleitung,
- Bedien- und Anzeigeterminals,
- Brandfallsteuerungen,
- Zusatzstromverbraucher,
- weitere anlagenspezifische Optionen.

Bereits während der Erfassung der Einzelkomponenten werden deren Verwendbarkeit und Kompatibilität untereinander überprüft. Ebenfalls wird die Einhaltung von Richtlinien soweit wie nötig überprüft. Während der Optimierung werden die Daten der aktuell zu projektierenden Meldeanlage mit Hilfe vorgegebener Algorithmen ausgewertet. Dabei werden sowohl die technische Realisierbarkeit unter Berücksichtigung der ausgewählten Geräte als auch der Endausbau mit einer geeigneten Melderzentrale überprüft. Mit Hilfe der vorgegebenen Algorithmen werden die zum Aufbau eines funktionsfähigen Brandmeldesystems erforderlichen Zusatzkomponenten ausgewählt und zu den bereits manuell erfaßten Einzelkomponenten hinzugefügt. Hierbei werden Grenzwerte für die jeweilige Zentrale berücksichtigt und eingehalten. Ausgewählte Zwischenschritte zum Projektierungsergebnis werden dokumentiert und zur Verfügung gestellt. Für alle manuell oder automatisch hinzugefügten Komponenten wird eine Notstromberechnung durchgeführt. Falls die Algorithmen keine Lösung zum angegebenen Problem finden, wird die Fehlerursache angegeben, und die Eingaben können entsprechend korrigiert werden und ein neuer Projektierungsversuch gestartet werden. Das Ergebnis des Konfigurationslaufes steht in verschiedenen Exportformaten zur Weiterverwendung zur Verfügung.

## Patentansprüche

1. Verfahren zur Automatisierung von Projektierungsabläufen für Meldeanlagen, bei dem
- technische Daten möglicher Einzelkomponenten der Meldeanlagen in einem Datenbank-System (2) abgespeichert werden,
- für eine zu projektierende Meldeanlage dafür vorgesehene Einzelkomponenten und deren räumliche Anordnung erfasst werden,
- die technischen Daten der vorgesehenen Einzelkomponenten aus dem Datenbank-System (2) extrahiert werden,
- die technischen Daten der vorgesehenen Einzelkomponenten auf deren gegenseitige Verträglichkeit überprüft werden,
- mit Hilfe vorgegebener Algorithmen (6)) aus den im Datenbank-System (2) hinterlegten Einzelkomponenten für den Betrieb der Meldeanlage benötigte Zusatzkomponenten sowie deren optimierte räumliche Struktur ermittelt werden und
- als Ergebnis die Struktur der Einzelkomponenten und der Zusatzkomponenten ausgegeben wird.

2. Verfahren zur Automatisierung von Projektierungsabläufen für Meldeanlagen nach Anspruch 1,
**dadurch gekennzeichnet,**
**dass** eine für die projektierte Meldeanlage geeignete Meldezentrale aus im Datenbank-System (2) hinterlegten Zentralen ermittelt wird.

3. Verfahren zur Automatisierung von Projektierungsabläufen für Meldeanlagen nach einem der Ansprüche 1 oder 2,
**dadurch gekennzeichnet,**
**dass** für alle ausgewählten Einzelkomponenten und Zusatzkomponenten eine Notstromberechnung durchgeführt wird.

4. Verfahren zur Automatisierung von Projektierungsabläufen für Meldeanlagen nach einem der Ansprüche 1, 2 oder 3,
**dadurch gekennzeichnet,**
**dass** im Falle, dass durch die Auswahl von im Datenbank-System (2) vorhandener Zusatzkomponenten keine betriebsfähige Meldeanlage ermittelbar ist, eine Fehlermeldung ausgegeben wird.

5. Verfahren zur Automatisierung von Projektierungsabläufen für Meldeanlagen nach einem der Ansprüche 1 bis 4,
**dadurch gekennzeichnet,**
**dass** zusätzlich Vorgaben für die Erweiterung der Meldeanlage eingegeben werden, die bei der Auswahl der Zusatzkomponenten und bei der Ermittlung der Struktur berücksichtigt werden.

6. Verfahren zur Automatisierung von Projektierungsabläufen für Meldeanlagen nach einem der Ansprüche 1 bis 5,
**dadurch gekennzeichnet,**
**dass** bereits während der Eingabe der Einzelkomponenten deren Kompatibilität überprüft wird und im Falle fehlender Kompatibilität eine Fehlermeldung angezeigt wird.

7. Verfahren zur Automatisierung von Projektierungsabläufen für Meldeanlagen nach einem der Ansprüche 1 bis 6
**dadurch gekennzeichnet,**
**dass** einzuhaltende Richtlinien für Meldeanlagen in das Datenbank-System eingegeben werden und bei der Ermittlung der Zusatzkomponenten und der Struktur berücksichtigt werden.

8. Verfahren zur Automatisierung von Projektierungsabläufen für Meldeanlagen nach einem der Ansprüche 1 bis 7,
**dadurch gekennzeichnet,**
**dass** die Einzelkomponenten über die Anzahl der Standardmelder und/oder die Anzahl der Spezialmelder und/oder die Anzahl akustischer oder optischer Alarmgeräte und/oder Geräte für die Alarmweiterleitung und/oder Bedien- und Anzeigeterminals und/oder Zusatzstromverbraucher eingegeben werden.

9. Verfahren zur Automatisierung von Projektierungsabläufen für Meldeanlagen nach einem der Ansprüche 1 bis 8,
**dadurch gekennzeichnet,**
**dass** die Meldeanlage als Brandmeldeanlage ausgebildet ist.

10. Verfahren zur Automatisierung von Projektierungsabläufen für Meldeanlagen nach Anspruch 9,
**dadurch gekennzeichnet,**
**dass** als Einzelkomponenten auch Brandfallsteuerungen eingegeben werden.

11. Computersystem zur Durchführung eines Verfahrens nach einem der Ansprüche 1 bis 10.
